## Europäisches Patentamt

(19) **European Patent Office**

**Office européen des brevets**

(11) Publication number : **0 212 011 B1**

(12) **EUROPEAN PATENT SPECIFICATION**

(45) Date of publication of patent specification :
16.01.91 Bulletin 91/03

(51) Int. Cl.⁵ : **B01D 3/06, F28F 9/10**

(21) Application number : **85305491.4**

(22) Date of filing : **01.08.85**

(54) **Multistage evaporation boiling equipment.**

(43) Date of publication of application :
04.03.87 Bulletin 87/10

(45) Publication of the grant of the patent :
16.01.91 Bulletin 91/03

(84) Designated Contracting States :
AT BE CH DE FR GB IT LI LU NL SE

(56) References cited :
DE-A- 2 326 365
DE-A- 2 348 009
DE-A- 2 360 238
DE-A- 2 640 977
FR-A- 2 448 703
GB-A- 899 308
US-A- 3 304 242

(72) Inventor : **Balazs, Janos**
18 Gozmozdony ut 18
H-1108 Budapest (HU)
Inventor : **Bocskor, Adam**
Benyovszky M. u. 52
H-1089 Budapest (HU)
Inventor : **Cseh, Otto**
2/d Apaly ut
H-1134 Budapest (HU)
Inventor : **Iring, Rezso**
36 Kresz G. u.
H-1132 Budapest (HU)

(74) Representative : **Gold, Tibor Zoltán et al**
T.Z.GOLD & COMPANY 9, Staple Inn
London WC1V 7QH (GB)

(73) Proprietor : **ENERGIAGAZDALKODASI INTEZET**
33-34, Bem-rakpart
H-1027 Budapest II (HU)

## Description

The subject matter of the invention is a multistage evaporation equiment, constructed in the form of a single unit.

Evaporation equipments are applied mostly in the chemical industry, in the food industry and in the water supply industry. As is known, boiling is a method for the separation of solutions from emulsions which requires a great deal of heat input. With the known boiling methods the solutions are separated into their components by heating the solution to evaporate the solvent so a more concentrated solution remains.

Evaporation equipments can be classified in different ways according to their mode of operation. Such modes include'evaporation' and'steaming out' equipments. The former method is carried out at a constant pressure, and heating causes directly the evaporation of the solvent. With the steaming out process the evaporation of the solvent is carried out in two steps : in the first step by heating the solution is heated and raised to a higher pressure, thereafter in the next step the pressure of the solution is decreased, then fed through a choke into a chamber at a lower pressure ; under the effect of the decreasing pressure a proportion of the solvent is evaporated and the temperature of the solution decreases. The evaporation'process'is called in the literature expansion process or as'flash evaporation'. The multistage evaporation processes are called in the 0literature 'multiflash process'.

An aim of the evaporation process is mostly the recovery of the dissolved material, but in several cases also the solvent as well as the dissolved material are regarded as useful products. An example for the last-mentioned is for instance the desalination of sea-water by boiling. With this process drinking water as well as salt are recovered from the sea-water.

A considerable problem of evaporation process is scaling. From the solution boiler scale and crystals of the solvent are deposited on the walls of the equipment, which causes flow cross-sections to be narrowed, whereby to impair the efficiency of heat transfer. For this reason evaporation equipment is preferably constructed so that the cleaning - primarily, mechanical cleaning - should be performable as easily as possible, and that the surfaces to be cleaned should be readily accessible, in order to promote the economy of the process.

The main problem, however, with evaporation processes is the very high heat consumption. In order to decrease the high heat consumption of the evaporation process and of the steaming-out process, multistage evaporation is used. Theoretically, heat consumption decreases inversely with the number of stages. In practice, the finite heat transfer surfaces decrease the heat consumption by less than that theoretically calculated.

Nonetheless, the multistage boiling approach has recently been incorporated into evaporation type boilers and achieved some success in decreasing heat losses. Again, practically speaking, this means that as many boilers are needed as there are number of stages. All this results in a decrease of heat consumption, but at a multi-fold increase in equipment capital costs.

Research has recently been undertaken to decrease these capital costs. One widely practiced solution has been to build stage evaporation boiling equipment in a single unit. Much of the expensive control means can thereby be eliminated. In the course of the new research, so called sandwich-units have been prepared as replacements for the single unit bodies. These sandwich units have been fixed by screw-locking into a single apparatus. Instead of regulating devices, fixed throttle means have been incorporated therein. The aforesaid approach has only superficially, but not in actuality, transformed the multistage evaporation boilers into a single unit. Capital costs of this approach are still very high. Moreover, this type equipment spawned other considerable problems.

One of these new problems was imperfect sealing caused by the need to screw-lock a number of different stages together. Even if all other segments of the equipment perform perfectly, seals (as is well known) will inevitably result in leakages, especially where there are a great number of seals. These leakages can easily ruin the operating economics of boiling equipment, especially that involving a vacuum. With multistage evaporation boiling methods at least part of the stages function under vacuum.

A new problem specific to the aforesaid equipment arises from the fact that plates instead of tubes are used, because of space limitations, as the heat transferring surfaces. Several drawbacks result from the use of plates. Though the heat transfer properties and mechanical cleaning possibilities of the plates are more favourable than those of the tubes, the plate construction itself is more complicated. Moreover, notwithstanding that mechanical cleaning of the plate equipment is easier, there is still a problem in trying to clean only small segments of the equipment. One cannot simply dismantle a small area. Rather, it is necessary to disjoin large segments of the equipment. This is a long and costly procedure. Safety is also compromised by being forced to disconnect a large number of sealing parts.

From FR-A-2 448 703 an evaporator for corrosive liquids is known in which a horizontally arranged coaxial tube bundle type of heat exchanger is utilized. The tube bundle is passed through a spaced apart pair of vertical walls of the evaporator, the space between the walls serving as a collector chamber for the hot medium, prior to its discharge after passing through the inner tube and returning in the outer tube of the coaxial tube arrangement. However, this disclosure does not address the problem of descaling or demounting the heat exchangers.

## Objects and Summary of the Invention

The object of our invention is to avoid the,above mentioned problems and drawbacks, or at least to minimize them.

The multi-stage evaporator according to the invention requires few seals. Routine cleaning of the apparatus, such as descaling, requires no dismantling of seals. Therefore, disruption of the vacuum is minimized. The cleaning process can be carried out easily since the apparatus employs tube type heatexchangers having very favourable heat-transfer properties.

Our invention is based on the recognition that it is unnecessary for seals to separate the various stages from one another, as in the prior art. Instead, the present invention employs seals which separate each stage heat exchanger from the body of the apparatus. This allows seals to be applied having a considerably smaller surface area. Consequently, when routinely cleaning a given stage heat exchanger of the apparatus only one seal must be loosened. Operational safety is thereby enhanced. In summary, when the necessary routine cleaning is to occur, the present invention does not require the breaking of seals and thereby protects the system vacuum.

According to the present invention a multistage evaporator constructed as a single integrated unit, wherein the stages are in use maintained at different pressures including vacuum and are separated from each other by perforated partitioning walls extending transversely within a housing through which a liquid to be evaporated may flow, each stage including a heat exchanger of the tube bundle type, characterised in that a first portion of each heat exchanger is disposed externally of the housing and a second portion thereof is disposed within the housing ; in that the heat exchangers of the said evaporator stages are sealed by a dismantleable channel cover without alteration of the pressure prevailing in such stages ; and in that the said first portions of the heat exchangers are each provided with a flange on the outer tube wall which is sealingly but releasably connected to a flange on the housing to enable the heat exchangers to be removed for cleaning.

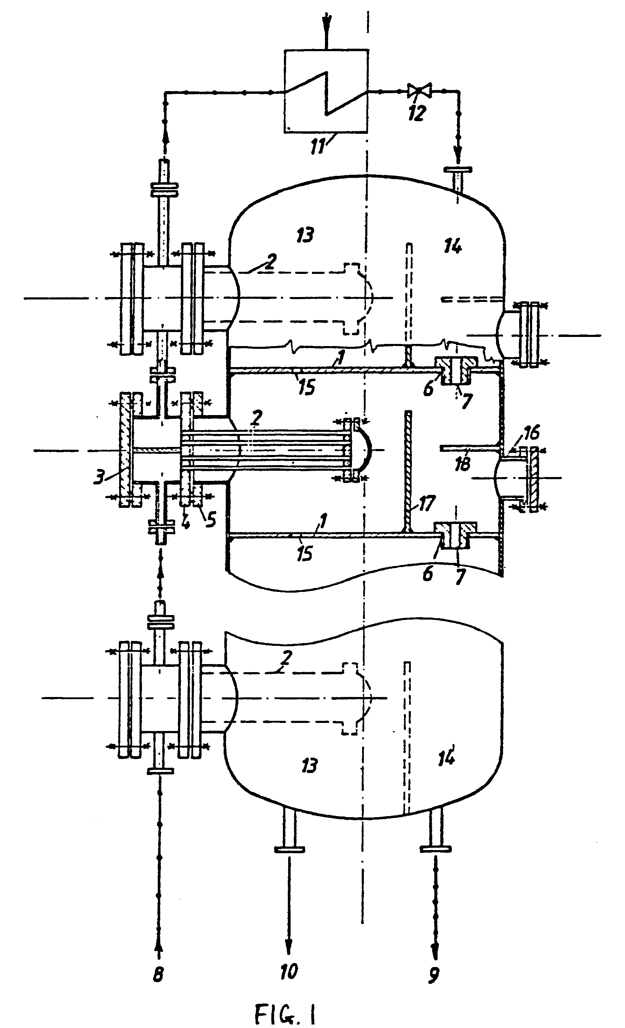

The apparatus according to the invention will be explained by the attached drawing. It shows the apparatus in side-view where one stage of the apparatus is represented in section. This sectional representation shows all the essential elements comprising the features of our invention.The drawing shows but three stages.It is within the contemplation of this invention that many more stages can be applied.

Referring to the drawing, a continuous line with widely spaced dots indicates the path of material entering entrance pipe 8. An exit pipe 9 is shown with a continuous line with closely spaced dots representing the direction along which material exits from this equipment. The plain continuous line through an exit pipe 10 shows the direction in which evaporated and subsequently condensed clean solvent departs from the apparatus. The volume (mass-stream) flowing in pipe 8 is equal to the volumes (mass-streams) of the leaving volumes feeding into pipes 9 and 10. The dissolved material in the form of a concentrated solution exits only at exit pipe 9.

The highest pressure is found in the highest stage ; as one descends down the stages the pressure decreases concomitantly. In the lower stages there is a substantial vacuum. The basic solution enters through entrance pipe 8 and streams from below upwards through several heat-exchangers 2 of the tube bundle type. The basic solution achieves a higher and higher temperature as it passes through each heat exchanger 2 of the tube bundle type because in each of the stages newly condensed solvent volume is evaporated. The vapor then condenses as an enriched solution on the outer wall of the tubes of the heatexchangers 2 where the condensed basic solution reheats the enriched solution.

A pump (not shown) circulating the enriched solution eventually creates such a high pressure that the enriched dilute solution cannot be evaporated even in the heat exchanger 11. The enriched dilute solution attains its highest temperature in the heat exchanger 11. The heat exchanger 11 is the single place where a heat transfer from the outside occurs. This is also the place in the multistage evaporation boiling equipment where enrichment is completed. The enriched solution then streams from the heat exchanger 11 through an outer throttle 12. Thereafter the pressure decreases to a value corresponding to that in the first stage. As a consequence of the pressure drop, a part of the solvent evaporates and recondenses back into the liquid phase on the outer wall of the heat exchanger 2, losing its latent heat. In the heat exchanger 11 only such volume of heat (steam) is transferred as is needed for the first stage evaporation. Evaporation in the lower stages is achieved by pressure differences between the stages so that the evaporated solvent of each stage can be condensed through the heat exchanger 2 which heats the enriched solution streaming upwards. It can be seen in the left-hand space 13 of the stages how solvent condensation gathers stage-bystage. In the righthand space 14 of the stages the stream flows downwardly, with even more concentration of the solution as the volume decreases. Finally, the material exits from the last stage in the form of a concentrated solution product.

It can be seen in the drawing that between each of the stages internal throttles 7, 15 are placed in a partition or a separating wall 1. The rows of throttles secure the feeding of the necessary volume of the solution. The internal throttles are uniformly dimensioned openings so as thereby to be exchangeable and constructed in the form of screw-locking means. The possibility that openings may be changed makes it easy to control the operation of the apparatus including altering the product output. The drawing, as but one example, illustrates only a single changeable throttle row, identified as 7, for feeding the solution. Throttles 7 may be fixed by screwing into opening 6. The aforesaid allows easy setting into operation of the equipment but it does not permit modification of product output because the opening of the inner throttles 15 feeding the solvent has a fixed rather than changeable diameter. The facility for an easy change of said inner throttles 7 enables the pipe 16 to be welded onto the equipment, supplied with a detachable cover.

The heat exchanger 2 applied to each evaporator (as opposed to cooling) stage has two outer connections which are detachable and fitted with seals. One connection utilizes a flange 5 of the evaporator housing through which the heat exchanger 2 is attached by means of a screw-lockable flange 4 for sealing. This connection enables the mounting in and dismantling of the whole heat exchanger 2 with its bundle of tubes to allow inspection of the apparatus and of the heat exchanger itself. The seal provided by this connection separates the inner stages of the apparatus from the outer environment. The evaporator stages depend on these seals for maintaining vacuum. Consequently, this sealing must be carried out with special care and the seal must have durability.

The other connection is the outer one identified as cover 3 of the heat exchanger 2. As with flange 5, cover 2 is secured by a scre-locking mechanism. When it becomes necessary to descale the heat exchanger, a relatively frequent operation, only the cover 3 needs be removed, and the vacuum is maintained. Another inspection at much longer intervals is the external inspection of heat exchanger 2. To this end, the connection between parts 4 and 5 must be broken and thus the vacuum is also broken.

It will be seen from the drawing that between the flange or cover 3 and the flange 4 a chamber divided by a horizontal wall is formed ; the lower half is an inlet to the heat exchanger tubes at the other ends of which there is a sealed spaced for the liquid from the tubes to turn and flow outwardly to the upper half or outlet of this chamber.

Partitions 17 positioned in each of the stages, separate the left side space 13 containing the solvent from the right side space 14 containing the concentrated solution, the mixing of the media being hindered thereby. Baffle plate 18 serves to intercept the solvent as it streams at high speed through the inner choke-means 7.

The most important advantage of the equipment according to the invention is that segments of the apparatus can be cleaned in a very simple way while retaining vacuum in the remaining parts of the apparatus.

## Claims

1. A multistage evaporator constructed as a single integrated unit, wherein the stages are in use maintained at different pressures including vacuum and are separated from each other by perforated partitioning walls (1) extending transversely within a housing through which a liquid to be evaporated may flow, each stage including a heat exchanger (2) of the tube bundle type, **characterised in that** a first portion of each heat exchanger (2) is disposed externally of the housing and a second portion thereof is disposed within the housing ; in that the heat exchangers (2) of the said evaporator stages are sealed by a dismantleable channel cover (3) without alteration of the pressure prevailing in such stages ; and in that the said first portions of the heat exchangers (2) are each provided with a flange (4) on the outer tube wall which is sealingly but releasably connected to a flange (5) on the housing to enable the heat exchangers (2) to be removed for cleaning.

2. An evaporator according to claim 1, **characterised in that** said perforated partitioning walls (1) include at least one opening (6) in which a releasably mounted throttle device (7) is disposed.

3. An evaporator according to claim 2, **characterised in that** a baffle plate (18) is disposed at a distance above each opening (6) and extends substantially parallel with the partition walls (1).

4. A multistage evaporator according to claim 1, **characterised in that** a liquid inlet chamber and a liquid outlet chamber associated with said heat exchanger (2) are formed adjacent said first portion and are separated from each other by a horizontal wall ; in that the said first portions of the heat exchangers (2) are each provided with a flange (4) on the outer tube wall which is sealingly connected to a flange (5) on the housing ; and in that each horizontal outer wall of said inlet and outlet chambers are readily demountably sealed by a cover (3) to allow access to the interior of the tubes of said heat exchanger (2) without breaking the sealed connection between said flanges (4, 5).

## Ansprüche

1. Vielstufenverdampfer, ausgeführt als eine einzelne, integrierte Einheit wobei die Stufen bei Betrieb auf verschiedenen Drücken einschließlich Vakuum gehalten werden und voneinander durch gelochte Zwischenwände (1) getrennt werden, die sich transversal in einem Gehäuse erstrecken, durch das eine zu verdampfende Flüssigkeit fließen kann, wobei jede Stufe einen Wärmetauscher (2) vom Rohrbündel - Typ enthält, dadurch gekennzeichnet, daß ein erster Abschnitt jedes Wärmetauschers (2) außerhalb des Gehäuses angeordnet ist und ein zweiter Abschnitt davon innerhalb des Gehäuses angeordnet ist ; daß die Wärmetauscher (2) der genannten Verdampferstufen abgedichtet sind durch eine abnehmbare Kanalabdeckung (3) ohne Änderung des in einer solchen Stufe herrschenden Druckes und daß die genannten ersten Abschnitte der Wärmetauscher (2) jeweils mit einem Flansch (4) an der äußeren Rohrwand versehen sind, der dichtend aber lösbar verbunden ist mit einem Flansch (5) am Gehäuse, um die Wärmetauscher (2) zur Reinigung entfernen zu können

2. Ein Verdampfer gemäß Anspruch 1, dadurch gekennzeichnet, daß die genannten gelochten Zwischenwände (1) mindestens I Öffnung (6) umfassen, in der eine lösbar befestigte Drosselvorrichtung (7) angeordnet ist.

3. Ein Verdampfer gemäß Anspruch 2, dadurch gekennzeichnet, daß eine Prallplatte (18) in einem Abstand über jeder Öffnung (6) angeordnet ist und sich im wesentlichen parallel zu den Zwischenwänden (I) erstreckt.

4. Vielstufenverdampfer gemäß Anspruch 1, dadurch gekennzeichnet, daß eine Flüssigkeit-Einlaßkammer und eine FlüssigkeitsAuslaßkammer, die dem genannten Wärmetauscher (2) zugeordnet sind, dem genannten ersten Abschnitt benachbart ausgebildet und durch eine horizontale Wand voneinander getrennt sind ; daß die genannten ersten Abschnitte der Wärmetauscher (2) jeweils mit einem Flansch (4) an der äußeren Rohrwand versehen sind, der dichtend mit einem Flansch (5) am Gehäuse verbunden ist, und daß jede horizontale äußere Wand der genannten Einlaß- und Auslaßkammern einfach entfernbar verschlossen ist durch eine Abdeckung (3), um Zugang zum Inneren der Röhren des genannten Wärmetauschers (2) zu ermöglichen, ohne die abgedichtete Verbindung zwischen den genannten Flanschen (4, 5) zu unterbrechen

**Revendications**

1. Un évaporateur à étages multiples réalisé sous forme d'une seule unité monobloc, dans lequel les étages sont maintenus, en service, à des pressions différentes, y compris sous vide, et sont séparés les uns des autres par des cloisons de séparation perforées (1) s'étendant transversalement à l'intérieur d'une enveloppe au travers de laquelle le liquide à évaporer peut s'écouler, chaque étage comprenant un échangeur de chaleur (2) du type à faisceau tubulaire, caractérisé en ce qu'une première partie de chaque échangeur de chaleur (2) est disposée à l'extérieur de l'enveloppe et une seconde partie de celui-ci est disposée à l'intérieur de l'enveloppe, en ce que les échangeurs de chaleur (2) desditsétages de l'évaporateur sont fermés de façon étanche par un couvercle formant des canaux séparés (3), démontables, sans que la pression régnant dans ces étages ne soit modifiée, et en ce que chacune desdites premières parties des échangeurs de chaleur (2) est pourvue d'un flasque (4) sur la paroi tubulaire extérieure, raccordé de façon étanche mais démontable à une bride (5) de l'enveloppe, pour permettre le démontage des échangeurs de chaleur (2) à des fins nettoyage.

2. Un évaporateur selon la revendication 1, caractérisé en ce que lesdites cloisons de séparation perforées (1) comprennent au moins une ouverture (6) dans laquelle est monté un dispositif démontable d'étranglement (7).

3. Un évaporateur selon la revendication 2, caractérisé en ce qu'une plaque formant chicane (18) est disposée à distance au dessus de chaque ouverture (6) et s'étend de façon sensiblement parallèle aux cloisons de séparation (1).

4. Un évaporateur à étages multiples selon la revendication 1, caractérisé en ce qu'il est ménagé une chambre d'arrivée de liquide et une chambre de sortie de liquide associées audit échangeur de chaleur (2) à proximité de ladite première partie et qui sont séparées l'une de l'autre par une cloison horizontale, en ce que chacune desdites premières parties des échangeurs de chaleur (2) est pourvue d'un flasque (4) sur la paroi tubulaire extérieure, raccordé de façon étanche à une bride (5) de l'enveloppe, et en ce que chaque cloison extérieure horizontale desdites chambres d'entrée et de sortie est fermée de façon étanche par un couvercle (3) facilement démontable, pour donner accès à l'intérieur des tubes dudit échangeur de chaleur (2), sans rupture du raccord étanche entre ledit flasque (4) et ladite bride (5).

FIG. 1